# EUROPÄISCHE PATENTSCHRIFT

(11) **EP 1 817 953 B1**
(45) Veröffentlichungstag und Bekanntmachung des Hinweises auf die Patenterteilung: **20.02.2013**
(21) Anmeldenummer: 07101302.3
(22) Anmeldetag: 29.01.2007
(51) Int. Cl.: A01D 34/74

(54) **Gerät zur Rasen-, Garten- bzw. Grundstückspflege und Arbeitshöheneinstellvorrichtung**
Device for lawn, garden or terrain maintenance and working height adjusting device
Appareil d'entretien de la pelouse, du jardin ou du terrain et dispositif de réglage en hauteur

(30) Priorität: 14.02.2006 DE 102006006689
(43) Veröffentlichungstag der Anmeldung: 15.08.2007
(73) Patentinhaber: SABO-Maschinenfabrik GmbH, 51645 Gummersbach (DE)
(72) Erfinder: Viebahn, Knut, 51647, Gummersbach (DE)
(74) Vertreter: John Deere GmbH & Co. KG

(56) Entgegenhaltungen:
- DE-U1- 7 818 721
- DE-U1- 29 613 543
- GB-A- 1 089 843
- US-A- 6 044 637

## Beschreibung

Die Erfindung betrifft ein Gerät zur Rasen-, Garten- und/oder Grundstückspflege, vorzugsweise einen Vertikutierer, welches sich höhenverstellbar auf dem Untergrund abstützt, mit einer Arbeitshöheneinstellvorrichtung mit einem zumindest drehbaren Einstellmittel sowie eine Arbeitshöheneinstellvorrichtung eines derartigen Geräts.

Die DE-C1-100 43 552 zeigt ein verfahrbares Haus- und Gartengerät mit einer Höheneinstellvorrichtung, welche einen Hebelarm aufweist, der an einer beweglichen Kulisse mit einer Kurvatur über eine Vielzahl von zueinander abgestuften Ruhepositionen anliegt, wobei die Kurvatur weiche Übergänge zwischen den einzelnen Ruhepositionen aufweist und die unterschiedlichen Stufen der Ruheposition unterschiedliche Einstellwinkel einer Höhenstellachse bewirken, wodurch sich eine Abstandsregulierung zwischen Fahrgestell und Untergrund ergibt.

Die GB-A-1 089 843 zeigt ein Vertikutiergerät, welches derart verstellbar ist, dass es sowohl Pflanzenwuchs an der Oberfläche bearbeiten als auch in den in den Boden eindringen kann. Das Vertikutiergerät weist zwei Hebel, zwischen deren unteren Armen zwei Enden einer Höheneinstellrolle angebracht sind und eine Höhenseinstelleinrichtung auf.

Das der Erfindung zugrunde liegende Problem wird darin gesehen, dass Geräte zur Rasen-, Garten- und/oder Grundstückspflege mit Arbeitshöheneinstellvorrichtung versehen sind, die aufwändig sind und/oder keine kontinuierliche Verstellung der Arbeitshöhe des Geräts zulassen.

Dieses Problem wird erfindungsgemäß durch die Lehre der Patentansprüche 1 bzw. 11 gelöst, wobei in den weiteren Patentansprüchen Merkmale aufgeführt sind, die die Lösung in vorteilhafter Weise weiterentwickeln.

Auf diese Weise wird ein Gerät zur Rasen-, Garten- und/oder Grundstückspflege zur Verfügung gestellt, welches sich höhenverstellbar auf dem Untergrund abstützt, und das eine Arbeitshöheneinstellvorrichtung mit einem zumindest drehbaren Einstellmittel aufweist, das eine kontinuierliche Verstellung der Arbeitshöhe ermöglicht und dabei einen einfachen Aufbau aufweist. Hierzu ist das Einstellmittel derart mit einem verschiebbaren Verstellmittel gekoppelt, dass das Verstellmittel eine Schwenkstellung eines Verstellhebels in Abhängigkeit von der Position des Einstellmittels bestimmt. Bei dem Gerät handelt es sich vorzugsweise um einen Vertikutierer. Das Gerät kann aber beispielsweise auch in der Art eines handgeschobenen oder handgeführten Rasenmähers, einer Kehrmaschine, eines Räumgeräts, einer Schnee- oder Gartenfräse oder eines jeden anderen geeigneten Geräts ausgebildet sein, bei dem eine Arbeitshöheneinstellung zweckmäßig ist.
Das Einstellmittel weist eine abgeschrägte Anlagefläche auf, die mit dem Verstellhebel zusammenwirkt, so dass der Verstellhebel an dieser Anlagefläche anliegt und/oder entlang gleitet und in unterschiedliche Positionen gebracht wird. Vorzugsweise kann der Verstellhebel verschwenken. Es ist aber auch denkbar, dass der Verstellhebel durch die Anlagefläche, die dann nicht zwingend abgeschrägt sein muss, sondern beispielsweise auch im Wesentlichen horizontal angeordnet sein kann, in unterschiedlichen Positionen gehalten werden kann.

Das Einstellmittel und das Verstellmittel können direkt oder indirekt ineinander eingeschraubt sein und/oder aufeinander bezogen verschraubt bzw. geschraubt übersetzt werden. Hierzu kann das Einstellmittel/Verstellmittel in der Art einer Gewindestange ausgebildet sein, die mit einem direkt in den anderen Bauteil eingebrachten Gewinde oder auch in einem Gewindeelement, beispielsweise in der Art einer Mutter, welche mit dem anderen Bauteil fest oder auch beweglich, beispielsweise verschwenkbar verbunden sein kann, zusammenwirken. An dem Verstellmittel kann ein Griffelement, beispielsweise in der Art eines Drehknopfes aber auch eine Kurbel oder ein anderes geeignetes Mittel, an dem eine Bedienungsperson angreifen kann, vorgesehen sein. Es ist auch eine Verstellung mittels eines Motors denkbar.

Ist das Verstellmittel verdrehsicher geführt bzw. gelagert, so kann in das Verstellmittel beispielsweise durch eine Schraubübersetzung eingeleitete Drehbewegung in einfacher Weise in eine axiale Bewegung umgesetzt werden.

Der Verstellhebel kann die Stellung wenigstens eines Rades bestimmen, über das sich das Gerät auf dem Untergrund abstützt. Es ist aber auch denkbar, dass der Verstellhebel die Stellung mehrerer Räder oder auch die Stellung eines Arbeitsmittel bezogen auf ein Gehäuse bestimmt.

Der Verstellhebel kann direkt oder auch über eine Hebelanordnung oder Übersetzung auf ein Rad oder mehrere Räder wirken. Eine einfache Verstellung von insbesondere mehreren Rädern ergibt sich aber, wenn der Verstellhebel auf eine Achse wirkt, welche vorzugsweise wenigstens ein Rad trägt, über das sich das Gerät auf dem Untergrund abstützt. Der Verstellhebel kann beispielsweise derart auf die Achse wirken, dass diese zusammen mit dem Verstellhebel verschwenken kann.

Um einen Schnellaushub der Arbeitshöhe bzw. eines Arbeitsmittels insbesondere unabhängig von der Drehstellung des Einstellmittels zu ermöglichen, kann vorgesehen sein, dass das Einstellmittel bezogen auf das Verstellmittel und/oder ein Gehäuse des Geräts verschwenkt werden kann.

Hierzu kann das Einstellmittel in einer Aussparung in der Art eines Langlochs oder Schlitzes in dem Gehäuse geführt werden.

Weist das Einstellmittel ein Anschlagmittel auf, das eine vorbestimmte Arbeitsstellung, die vorzugsweise einer ausgehobenen Stellung eines Arbeitsmittels entspricht, bestimmen kann, so kann dieses mit einem Anlagevorsprung, der beispielsweise in das Gehäuse eingeformt oder an diesem vorgesehen ist, zusammenwirken.

In dem Verstellmittel kann ein Gewinde vorgesehen sein. Weist es aber ein schwenkbar gelagertes Gewindeelement auf bzw. ist es mit einem solchen wirksam verbunden, so kann durch das Gewindeelement sowohl eine axiale Bewegung als auch eine Schwenkbewegung des Einstellmittels bezogen auf das Verstellmittel ermöglicht werden.

Das Einstellmittel kann federbelastet ausgebildet sein. Auf diese Weise kann beispielsweise der Abstandhalter durch ein entsprechendes Spannmittel, beispielsweise eine Druckfeder, die zwischen dem Gehäuse und dem Griffelement vorgesehen ist, in Richtung des Gehäuses und/oder des Anlagevorsprungs belastet oder in Anlage mit dem Gehäuse und/oder dem Anlagevorsprung gehalten werden.

Eine Arbeitshöheneinstellvorrichtung kann an einem Gerät auch nachgerüstet werden oder als optionale Ausstattung eines Geräts zur Rasen-, Garten - und/oder Grundstückspflege vorgesehen sein.

In der Zeichnung ist ein nachfolgend näher beschriebenes Ausführungsbeispiel der Erfindung dargestellt. Es zeigt:
- Fig. 1: ein Gerät zur Rasen-, Garten bzw. Grundstückspflege in der Art eines Vertikutierers mit einer Arbeitshöheneinstellvorrichtung,
- Fig. 2: die Arbeitshöheneinstellvorrichtung gemäß Figur 1 in einer vergrößerten Darstellung,
- Fig. 3: Die Arbeitshöheneinstellvorrichtung gemäß Figur 2 in einer Betriebsstellung und einer Stellung in der ein Arbeitsmittel des Geräts ausgehoben ist und
- Fig. 4: eine Schnittdarstellung gemäß der Linie 4-4 aus Figur 3.

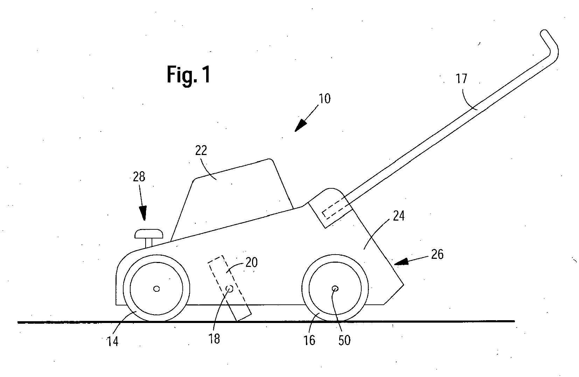

Es wird zuerst auf Figur 1 Bezug genommen, welche einen handgeführten Vertikutierer bzw. ein Gerät zur Rasen-, Garten- bzw. Grundstückspflege 10 mit einem Gehäuse 12 zeigt, das sich über zwei vordere und zwei hintere, nicht angetriebene Räder 14, 16 auf dem Untergrund abstützt und an dem ein Führungsholm 17 vorgesehen ist.

In dem Gehäuse 12 ist eine bezogen auf die übliche Bewegungsrichtung des Vertikutierers 10 zumindest im Wesentlichen quer angeordnete Messerwelle 18 vorgesehen, welche mit entsprechenden Arbeits- bzw. Vertikutiermitteln 20 bestückt ist und mittels eines auf dem Gehäuse 12 angeordneten und nur andeutungsweise dargestellten Motor 22 angetrieben werden kann.

Das Gehäuse 12 ist nach unten offen ausgebildet und weist darüber hinaus in einem rückwärtigen Bereich 24 eine sich im Wesentlichen über die gesamt Fahrzeugbreite erstreckende Auswurföffnung 26 auf.

In einem vorderen Bereich des Gehäuses 12 ist ein Arbeitshöheneinstellvorrichtung 28 vorgesehen, auf die im Folgenden genauer eingegangen wird.

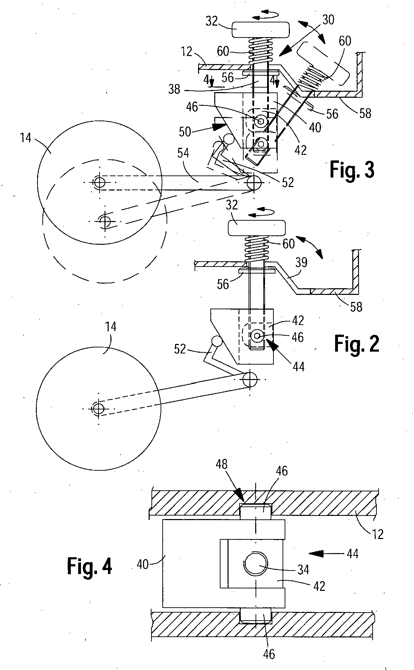

Es wird nun auf Figur 2 Bezug genommen, in der die Arbeitshöheneinstellvorrichtung 28 genauer dargestellt wird.

Die Arbeitshöheneinstellvorrichtung 28 weist ein Einstellmittel 30 auf, welches wiederum ein Griffelement 32 aufweist, das drehfest auf einer Stange 38 aufgesetzt ist, die auf ihrem dem Griffelement 32 gegenüberliegenden Endbereich 34 ein Gewinde 36 aufweist.

Das Griffelement 32 ist oberhalb des Gehäuses 12 angeordnet, so dass es durch eine Bedienungsperson ergriffen werden kann; die Stange 38 erstreckt sich durch eine Aussparung 39 in dem Gehäuse 12.

Der dem Griffelement 32 gegenüberliegende Endbereich der Stange 38 wirkt mit einem Verstellelement 40 derart zusammen, dass es in einem Gewindeelement 42 einschraubbar aufgenommen wird. Das Gewindeelement 42 ist in einer Aussparung 44 in dem Verstellelement 40 durch geeignete Sicherungsmittel 46, beispielsweise in der Art von Sicherungsstiften, schwenkbar aber unverdrehbar gesichert (siehe nun auch Figur 3).
Das Verstellelement 40 wird in einer an dem Gehäuse 12 vorgesehenen Führung 48 in der Art einer Nut geführt, so dass es, wenn das Gewinde 36 der Stange 38 in das Gewindeelement 42 hinaus- bzw. herausgeschraubt, eine axiale Bewegung entlang der Längserstreckung der Stange 38 ausführt, sich aber nicht drehen kann.

Das Verstellelement 40 weist darüber hinaus eine in vertikaler Richtung abgeschrägte Anlagefläche 50 auf, die mit einem Verstellhebel 52 derart zusammenwirkt, dass dieser einenends an der Anlagefläche 50 anliegt. Andernends ist der Verstellhebel 52 mit einer in dem Gehäuse 12 gelagerten Achse 54 fest verbunden, auf die die vorderen Räder 14 des Geräts aufgesetzt sind. Die Achse 54 ist in bekannter Art und Weise derart abgekröpft ausgebildet, dass eine durch den Verstellhebel 52 bewirkte Drehbewegung der Achse eine Höhenverstellung der Räder 14 mit Bezug auf das Gehäuse 12 bewirken.

Verschiebt sich das Verstellelement 40 aufgrund einer Drehbewegung des Einstellelements 32, so wird der Verstellhebel 52 durch die Anlagefläche 50 verschwenkt. Zusammen mit dem Verstellhebel 52 verschwenkt auch die mit diesem fest verbundene Achse 54 und es erfolgt eine Höhenverstellung der Räder 14 mit Bezug auf das Gehäuse 12.

Da sich sowohl die vorderen als auch die hinteren Räder 14, 16 sich auf dem Untergrund abstützen, bewirkt eine Höhenverstellung der vorderen Räder 14 eine Kippbewegung des Gehäuses 12 um die hinteren Räder. Aufgrund dieser Kippbewegung wird die Arbeitshöhe des Arbeitsmittels 20 verändert bzw. eingestellt.

Die gezeigte Arbeitshöheneinstellung 28 weist darüber hinaus eine Schnellaushubfunktion auf, welche aber keinen zwingend notwendigen Bestandteil der vorliegenden Erfindung darstellt, sondern als eine eigenständige Erfindung betrachtet werde kann.

Das Einstellmittel 32 bzw. die Stange 38 erstreckt sich durch die Aussparung 39 in dem Gehäuse 12. Diese Aussparung 39 ist in der Art eines Langlochs oder Schlitzes ausgebildet. Die Stange 38 ist mit ihrem ein Gewinde 36 aufweisenden Endbereich 34 in dem Gewindeelement 42 aufgenommen. Dieses Gewindeelement 42 ist in dem Verstellelement 40 bzw. in der Aussparung 44, welche einen schlitz- oder langlochartigen Querschnitt aufweist, angeordnet.

An der Stange 38 ist unterhalb des Gehäuses 12 ein Abstandhalter 56 von der Aussparung 39 beabstandet angebracht, der derart dimensioniert ist, dass er nicht durch die Aussparung 39 hindurchtreten kann.

Das Gehäuse 12 weist darüber hinaus an die Aussparung 39 angrenzend einen Anlagevorsprung 58 auf, der bezogen auf das Gehäuse 12 von der Aussparung 39 weiter innenliegend angeordnet ist.

Auf die Stange 38 ist zwischen dem Griffelement 32 und dem Gehäuse 12 ein Spannelement 60 in der Art einer Druckfeder aufgesetzt, welches die Stange 38 bzw. das Griffelement 32 nach oben und somit den Abstandhalter 56 in Richtung des Gehäuses bzw. des Anlagevorsprungs 56 belastet.

Um das Arbeitsmittel 20 auszuheben bzw. um es in eine Außer-Betriebsstellung zu bringen, sind die vorderen Räder 14 mit Bezug auf das Gehäuse 12 in ihre vollständig nach unten verschwenkte Stellung (Figur 3, in unterbrochenen Linien dargestellt) zu bringen.

Diese Stellung kann einerseits dadurch erreicht werden, dass das Einstellmittel 30 in das Verstellmittel 40 eingeschraubt wird, so dass das Rad 14 kontinuierlich nach unten verschwenkt. Soll aber eine Schnellaushebung stattfinden, so kann das Einstellmittel 30 in der Aussparung 39 und zusammen mit dem Gewindeelement 42 in der Aussparung 40 in Richtung des Anlagevorsprungs 58 verschwenkt werden.

Da der Anlagevorsprung 58 von der Aussparung 39 nach innen beabstandet ist, wird das Einstellmittel 30, durch den Abstandhalter 56, der an dem Anlagevorsprung 58 zur Anlage kommt, bezogen auf das Gehäuse 12 nach innen bzw. allgemein nach unten verschoben. Das Verstellelement 40 folgt dieser Bewegung, ohne dass das Einstellmittel 30 in das Verstellelement 40 eingeschraubt wird, wodurch der Verstellhebel 52 und somit die Achse 54 und das Rad nach unten bzw. in ihre untere Stellung verschwenken.

Um das Rad 14 bzw. das Arbeitsmittel wieder in eine Betriebsstellung zu bringen, muss das Einstellmittel 30 wieder in seine unverschwenkte Betriebsstellung zurückgebracht werden, wodurch sich der Abstandhalter 56 von dem Anlagevorsprung 58 löst und sich das Einstellmittel 30 und das Verstellmittel 40 wieder nach oben verschieben, wodurch der Verstellhebel 52, die Achse 54 und das Rad 14 wieder die Stellung einnehmen, die sie vor der Schnellaushebung eingenommen haben, da die Position des Einstellmittel 30 bezogen auf das Verstellmittel 40 nicht verändert wurde.

## Patentansprüche

1. Gerät (10) zur Rasen-, Garten- und/oder Grundstückspfiege, vorzugsweise ein Vertikutierer, welches sich höhenverstellbar auf dem Untergrund abstützt, mit einer Arbeitshöheneinstellvorrichtung (28) mit einem zumindest drehbaren Einstellmittel (30), das derart mit einem verschiebbaren Verstellmittel (40) gekoppelt ist, dass das Verstellmittel (40) eine Schwenkstellung eines Verstellhebels (52) in Abhängigkeit von der Position des Einstellmittels (30) bestimmt, **dadurch gekennzeichnet, dass** das Einstellmittel (30) eine vorzugsweise abgeschrägte Anlagefläche (50) aufweist, die mit dem Verstellhebel (52) zusammenwirkt.

2. Gerät nach Anspruch 1, **dadurch gekennzeichnet, dass** das Einstellmittel (30) und das Verstellmittel (40) direkt oder indirekt ineinander eingeschraubt sind.

3. Gerät nach Anspruch 2, **dadurch gekennzeichnet, dass** das Verstellmittel (40) verdrehsicher geführt bzw. gelagert ist.

4. Gerät nach einem oder mehreren der vorherigen Ansprüche, **dadurch gekennzeichnet, dass** der Verstellhebel (52) die Stellung wenigstens eines Rades (14) bestimmt, über das sich das Gerät (10) auf dem Untergrund abstützt.

5. Gerät nach einem oder mehreren der vorherigen Ansprüche, **dadurch gekennzeichnet, dass** der Verstellhebel (52) auf eine Achse wirkt (54), welche vorzugsweise wenigstens ein Rad (12) trägt, über das sich das Gerät (10) auf dem Untergrund abstützt.

6. Gerät nach einem oder mehreren der vorherigen Ansprüche, **dadurch gekennzeichnet, dass** das Einstellmittel (30) bezogen auf das Verstellmittel (40) und/oder ein Gehäuse (12) des Geräts (10) verschwenkt werden kann.

7. Gerät nach Anspruch 6, **dadurch gekennzeichnet, dass** das Einstellmittel (30) in eine Aussparung (39) in der Art eines Langlochs oder Schlitzes in dem Gehäuse (12) geführt wird.

8. Gerät nach einem oder mehreren der vorherigen Ansprüche, **dadurch gekennzeichnet, dass** das Einstellmittel (30) einen Abstandhalter (56) aufweist, der eine vorbestimmte Arbeitsstellung, die vorzugsweise einer ausgehobenen Stellung eines Arbeitsmittels (20) entspricht, bestimmen kann.

9. Gerät nach einem oder mehreren der vorherigen Ansprüche, **dadurch gekennzeichnet, dass** das Verstellmittel (40) ein schwenkbar gelagertes Gewindeelement (42) aufweist bzw. mit einem solchen wirksam verbunden ist.

10. Gerät nach einem oder mehreren der vorherigen Ansprüche, **dadurch gekennzeichnet, dass** das Einstellmittel (30) vorzugsweise derart federbelastet ist, dass der Abstandhalter (56) in Richtung des Gehäuse und/oder eines Anlagevorsprung (58) belastet wird.

11. Arbeitshöheneinstellvorrichtung (28) eines Geräts (10) nach einem oder mehreren der vorherigen Ansprüche.

## Claims

1. Device (10) for lawn, garden and/or terrain maintenance, preferably a verticutter, which is supported in a height-adjustable manner on the underlying surface, with a working height adjusting device (28) having an at least rotatable setting means (30) which is coupled to a displaceable adjusting means (40) in such a manner that the adjusting means (40) determines a pivoting position of an adjusting lever (52) depending on the position of the setting means (30), **characterized in that** the setting means (30) has a preferably bevelled contact surface (50) which interacts with the adjusting lever (52).

2. Device according to Claim 1, **characterized in that** the setting means (30) and the adjusting means (40) are screwed directly or indirectly one into the other.

3. Device according to Claim 2, **characterized in that** the adjusting means (40) is guided or mounted in a manner secure against rotation.

4. Device according to one or more of the preceding claims, **characterized in that** the adjusting lever (52) determines the position of at least one wheel (14) via which the device (10) is supported on the underlying surface.

5. Device according to one or more of the preceding claims, **characterized in that** the adjusting lever (52) acts on an axle (54) which preferably supports at least one wheel (12) via which the device (10) is supported on the underlying surface.

6. Device according to one or more of the preceding claims, **characterized in that** the setting means (30) can be pivoted with respect to the adjusting means (40) and/or to a housing (12) of the device (10).

7. Device according to Claim 6, **characterized in that** the setting means (30) is guided in a recess (39) in the manner of an elongated hole or slot in the housing (12).

8. Device according to one or more of the preceding claims, **characterized in that** the setting means (30) has a spacer (56) which can determine a predetermined working position which preferably corresponds to a raised position of a working means (20).

9. Device according to one or more of the preceding claims, **characterized in that** the adjusting means (40) has a pivotably mounted threaded element (42) or is effectively connected to such a threaded element.

10. Device according to one or more of the preceding claims, **characterized in that** the setting means (30) is preferably springloaded in such a manner that the spacer (56) is loaded in the direction of the housing and/or of a contact projection (58).

11. Working height adjusting device (28) of a device (10) according to one or more of the preceding claims.

## Revendications

1. Appareil (10) d'entretien de la pelouse, du jardin et/ou du terrain, de préférence scarificateur, qui s'appuie de manière réglable en hauteur sur la surface sous-jacente, comprenant un dispositif de réglage de hauteur de travail (28) doté d'un moyen de réglage (30) au moins rotatif qui est accouplé à un moyen d'ajustage (40) coulissant de telle sorte que le moyen d'ajustage (40) détermine une position de pivotement d'un levier d'ajustage (52) en fonction de la position du moyen de réglage (30), **caractérisé en ce que** le moyen de réglage (30) comprend une surface d'appui (50) de préférence inclinée qui coopère avec le levier d'ajustage (52).

2. Appareil selon la revendication 1, **caractérisé en ce que** le moyen de réglage (30) et le moyen d'ajustage (40) sont vissés directement ou indirectement l'un dans l'autre.

3. Appareil selon la revendication 2, **caractérisé en ce que** le moyen d'ajustage (40) est guidé ou monté de manière bloquée en rotation.

4. Appareil selon l'une quelconque ou plusieurs des revendications précédentes, **caractérisé en ce que** le levier d'ajustage (52) détermine la position d'au moins une roue (14) par l'intermédiaire de laquelle l'appareil (10) s'appuie sur la surface sous-jacente.

5. Appareil selon l'une quelconque ou plusieurs des revendications précédentes, **caractérisé en ce que** le levier d'ajustage (52) agit sur un essieu (54) qui porte de préférence au moins une roue (12) par l'intermédiaire de laquelle l'appareil (10) s'appuie sur la surface sous-jacente.

6. Appareil selon l'une quelconque ou plusieurs des revendications précédentes, **caractérisé en ce que** le moyen de réglage (30) peut être pivoté par rapport au moyen d'ajustage (40) et/ou à un boîtier (12) de l'appareil (10).

7. Appareil selon la revendication 6, **caractérisé en ce que** le moyen de réglage (30) est guidé dans un évidement (39) de type trou oblong ou fente dans le boîtier (12).

8. Appareil selon l'une quelconque ou plusieurs des revendications précédentes, **caractérisé en ce que** le moyen de réglage (30) comprend une pièce d'écartement (56) qui peut déterminer une position de travail prédéterminée qui correspond de préférence à une position relevée d'un moyen de travail (20).

9. Appareil selon l'une quelconque ou plusieurs des revendications précédentes, **caractérisé en ce que** le moyen d'ajustage (40) comprend un élément fileté (42) monté pivotant ou est relié fonctionnellement à un tel élément fileté.

10. Appareil selon l'une quelconque ou plusieurs des revendications précédentes, **caractérisé en ce que** le moyen de réglage (30) est de préférence sollicité par ressort de telle sorte que la pièce d'écartement (56) soit sollicitée en direction du boîtier et/ou d'une saillie d'appui (58).

11. Dispositif de réglage de hauteur de travail (28) d'un appareil (10) selon l'une quelconque ou plusieurs des revendications précédentes.
